# EUROPÄISCHE PATENTSCHRIFT

(11) **EP 2 164 804 B1**
(45) Veröffentlichungstag und Bekanntmachung des Hinweises auf die Patenterteilung: **12.02.2014**
(21) Anmeldenummer: 08773802.7
(22) Anmeldetag: 02.07.2008
(51) Int. Cl.: C01B 33/037

(54) **VERFAHREN ZUR AUFBEREITUNG VON SILICIUMMATERIAL**
METHOD FOR PROCESSING SILICON MATERIAL
PROCÉDÉ DE PRÉPARATION D'UN MATÉRIAU DE SILICIUM

(30) Priorität: 05.07.2007 DE 102007031471
(43) Veröffentlichungstag der Anmeldung: 24.03.2010
(73) Patentinhaber: Fraunhofer Gesellschaft zur Förderung der angewandten Forschung e.V., 80686 München (DE)
(72) Erfinder: VON CAMPE, Hilmar, 61352 Bad Homburg (DE); REIME, Sascha, 63477 Maintal (DE); BUSS, Werner, 53456 Hanau (DE); SCHWIRTLICH, Ingo, 63987 Miltenberg (DE)
(86) Internationale Anmeldenummer: PCT/EP2008/005381
(87) Internationale Veröffentlichungsnummer: WO 2009/003688

(56) Entgegenhaltungen:
- EP-A- 0 905 796
- EP-A- 0 983 804
- EP-A- 1 043 249
- EP-A- 1 876 143
- EP-A- 1 894 887
- WO-A-97/31716
- WO-A-03/018207
- WO-A-2005/061383
- WO-A-2008/012215
- JP-A- 4 065 311
- JP-A- 10 203 815
- JP-A- 2000 191 312

## Beschreibung

Die Erfindung bezieht sich auf ein Verfahren zur Aufbereitung von in einem Materialgemisch vorhandenem oberflächenverunreinigten Siliciummaterial wie Siliciumstücken, -granulat einschließlich Kugelgranulat und/oder -waferbruch.

Im verstärkten Umfang wird zur Herstellung von Halbleiterbauelementen, insbesondere Solarzellen Silicium benötigt, um z. B. nach dem Czochralski-Verfahren, dem Blockguss- oder dem Edge-Defined-Film-Fed-Growth (EFG)-Verfahren Siliciumblöcke bzw. -scheiben herzustellen, aus denen sodann Wafer hergestellt werden. Da neues Silicium den aktuellen Bedarf nicht decken kann und um wirtschaftliche Reserven zur Kostensenkung zu erschließen, werden Möglichkeiten gesucht, nicht unmittelbar brauchbares Siliciummaterial, wie Abfälle, als ungebrauchte Reserven nutzen zu können.

Die DE-A-10 2005 025 435 bezieht sich auf ein Recyclingverfahren für Siliciumreste, wobei bei einem Verfeinerungsschritt ein Elektronenstrahl verwendet wird. Entsprechendes ist der DE-A-10 2005 025 436 zu entnehmen.

Gegenstand der DE-A-287 468 ist ein Verfahren zur Herstellung von feinstkörnigem, hochreinem, reaktionsfähigem Silicium, wobei nach einem Zerkleinern des Ausgangsproduktes eine nasschemische Reinigung erfolgt. Ein Reinigen von Silicium nach der US-A-2,937,929 oder der EPA-0 548 504 erfolgt gleichfalls nasschemisch.

Die EP-B-1 465 902 sieht eine magnetische Trennung von siliciumhaltigem Material vor, wobei Silicium enthaltendes Material aus einem Fließbett eines Fließbettreaktors entfernt und sodann einer magnetischen Trennvorrichtung zugeführt wird.

Um nichtmetallische Verunreinigungen aus Silicium zu entfernen, wird nach der WO-A-2005/061383 Siliciumausgangsmaterial gemahlen und sodann bei Unterdruck bei einer Temperatur erhitzt, die unterhalb des Schmelzpunktes des Siliciums liegt.

Um hochreines Silicium für Solarzellen herzustellen, werden nach der JP-A-2000 19 13 12 Siliciumpulver mit Salz- bzw. Schwefelsäure und Wasserstoffperoxid behandelt.

Mittels eines Elektronenstrahls werden nach der JP-A-101 821 38 Verunreinigungen wie Phosphor, Aluminium und Cadmium aus Siliciummaterial entfernt.

Zum Entfernen von Verunreinigungen wie Eisen, Aluminium, Cadmium, Kupfer oder Bor wird nach der JP-A-10 203 815 Silicium mit Salz- bzw. Schwefelsäure behandelt.

Eine nasschemische Behandlung sowie magnetische Separierung zum Entfernen von Verunreinigungen von Siliciumausgangsmaterial wird nach der JP-A-09 165 212 vorgeschlagen.

Um radioaktive Elemente aus einem Siliciumpulver zu entfernen, gelangt nach der JP-A-04 065 311 Mineralsäure zum Einsatz.

Nach der EP-A-1 043 249 wird zu reinigender Siliciumbruch mittels eines Schwingförderers gefördert, dessen Förderfläche aus Reinstsilicium gefertigt ist. Während des Transports erfolgt eine Verrundung, um die Metallkontamination zu reduzieren.

Zum Reinigen poykristallinen Siliciums wird dieses nach der EP-A-0 905 796 mit vollentsalztem Wasser abgespült.

Ein optoelektrisches Klassieren von Halbleitermaterial wird in der EP-A-0 983 804 beschrieben.

Um magnetische Verunreinigungen aus Siliciumpartikeln zu entfernen, wird nach der WO-A-03/018207 ein Förderband benutzt, das um eine aus einem permanenten Magneten bestehende Umlenkrolle geführt wird, um magnetische und nicht magnetische Partikel trennen zu können.

Ein sortengerechtes Aufbereiten von Kunststoffpartikeln erfolgt nach der WO-A-97/31716 durch Nassseparation.

Nach der WO-A-2005/061383 werden Metallteile aus Silicium dadurch entfernt, dass Ausgangssubstanzen zu einem Siliciumpulver gemahlen werden, um sodann ein Heizen unter Unterdruck bis zu einer Temperatur unterhalb des Schmelzpunktes von Silicium durchzuführen.

Die JP-A-10203815, JP-A-2000191312 beziehen sich auf Nassaufschlussverfahren zum Reinigen von Silicium.

Um radioaktive Elemente aus metallischem Siliciumpulver zu entfernen, schlägt die JP-A-04065311 vor, dass das Siliciumpulver einer sauren Lösung zugeführt wird.

Der vorliegenden Erfindung liegt die Aufgabe zugrunde, ein Verfahren der eingangs genannten Art so weiterzubilden, dass Siliciummaterial, das zum unmittelbaren Einsatz zur Produktion von Halbleitermaterial nicht geeignet ist, derart aufbereitet werden kann, dass eine erneute Nutzung möglich ist, so dass auftretende Materialengpässe abgeschwächt bzw. vermieden werden können.

Erfindungsgemäß wird die Aufgabe insbesondere gelöst durch die Verfahrensschritte:
a) Entfernen von an der Oberfläche des Siliciummaterials anhaftendem Material durch Absieben des Materialgemisches mittels eines Siebgewebes,
b) Separieren von elektrisch leitenden Grobpartikeln aus dem Materialgemisch und
c) Entfernen von Fremdmaterial und stark oxidiertem Siliciummaterial aus dem Materialgemisch.

Die zuvor angegebenen Verfahrensschritte müssen nicht in der angegebenen Reihenfolge durchgeführt werden. Vielmehr ist je nach Beschaffenheit des Ausgangs-Siliciummaterials die zum optimierten Aufbereiten erforderliche Reihenfolge wählbar.

Unabhängig hiervon können die Verfahrensschritte bevorzugterweise ergänzt werden durch
d) Waschen des Siliciummaterials,
e) Trocknen des Siliciummaterials
f) Ätzen des Siliciummaterials und
g) Trocknen des Siliciummaterials.

Sofern sehr staubiges Siliciummaterial aufbereitet werden soll, wird dieses zunächst z. B. in einer Siebmaschine abgesiebt, um sodann die zuvor erläuterten Verfahrensschritte in der gewünschten Reihenfolge und im gewünschten Umfang durchzuführen.

Entsprechend aufbereitetes Siliciummaterial kann sodann aufgeschmolzen und zur Herstellung von Halbleiterbauelementen wie Solarzellen verwendet werden.

Insbesondere wird als Ausgangs-Siliciummaterial ein solches verwendet, bei dem die Verunreinigungskonzentration x der Partikel im Inneren - im Englischen bulk genannt - beträgt x ≤ 300 ppb, vorzugsweise 10 ppt ≤ x ≤ 300 ppb. Im Inneren - auch im Volumen der Partikel zu bezeichnen - bedeutet der Bereich, der unterhalb der Oberfläche liegt, die verunreinigt ist. Zu der Verunreinigung gehört auch eine etwaige Oxidschicht an der Oberfläche der Silicium-Partikel. Entsprechendes oberflächengereinigtes Silicium ist für den Herstellungsprozess von Halbleiterbauelementen wie Solarzellen qualifiziert und kann somit im EFG- oder Blockgussverfahren verarbeitet werden.

Aufgrund der erfindungsgemäßen Lehre besteht die Möglichkeit, ein Siliciummaterial mit Oberflächenverunreinigungen zwischen 1 ppb bis 1000 ppm, insbesondere zwischen 10 ppm und 1000 ppm, wobei die Angabe sich auf das Siliciumgewicht bezieht, derart aufzubereiten, dass eine Wiederverwendung im Herstellungsprozess für Halbleiterbauelemente wie Solarzellen möglich ist. Verunreinigende Zusätze im Materialgemisch wie Klebestreifen, Haare, mechanische Komponenten, Staub und alle anderen nicht ins Silicium gehörenden Elemente werden aufgrund der erfindungsgemäßen Lehre entfernt.

Die Verfahrensschritte a), b) und c) können als Trockenentstaubung bezeichnet werden. Dabei ist vorgesehen, dass zum Entfernen von an der Oberfläche des Materialgemischs anhaftendem Fremdmaterial das Materialgemisch auf eine erste Vibrationsrinne gegeben wird, auf dieser verteilt und sodann dosiert auf zumindest eine Sieb- bzw. Siebrinneneinrichtung übergeben wird. Die erste Vibrationsrinne sollte dabei derart dimensioniert sein, dass diese als Materialspeicher oder -bunker dient.

Das Aufgeben des Materialgemisches auf die erste Vibrationsrinne kann aus Fässern oder anderen Behältern erfolgen, in denen zuvor das aufzuarbeitende Material gesammelt worden ist. Hierzu wird ein entsprechender Behälter auf einen Träger wie Fassträger angeordnet und gekippt, damit das Material auf die Vibrationsrinne übergeben werden kann.

Die Siebeinrichtung kann mehrere Siebrinnen oder Siebrinnen-Abschnitte umfassen, die derart stufenförmig zueinander angeordnet werden, dass beim Übergang von einer Siebrinne auf die folgende Siebrinne ein Wenden von Teilen bzw. Partikeln des Silicium-Materialgemisches erfolgt.

Durch die Siebeinrichtung, die auf einem Vibrationsantrieb konstruiert sein sollte, können anhaftende Partikel wie Staub, Metalle oder andere Kleinstpartikel mit Durchmessern z. B. bis zu 0,5 mm oder kleiner entfernt werden. Durch das Wenden des Materials während des Transports ist ein Abreinigen der Oberfläche der Bestandteile des Materialgemischs weitgehend sichergestellt.

Dadurch, dass die Siebeinrichtung in Vibration versetzt wird, also an einen Vibrationsantrieb angeschlossen ist, ergibt sich der Vorteil, dass ein Transport des aufzubereitenden Materials zur nächsten Anlagekomponente erfolgt und - wie ausgeführt - gleichzeitig die Trennung von anhaftenden Partikeln von der Materialoberfläche erfolgt.

Das Siebgewebe der Siebeinrichtung ermöglicht folglich ein Ausschleusen von Fremdstoffen aus den weiteren Aufbereitungsschritten. Das Siebgewebe selbst sollte eine Maschenweite zwischen 0,1 mm und 10 mm, vorzugsweise einen Bereich zwischen 0,5 mm und 10 mm aufweisen.

Von der Siebeinrichtung durchläuft das mit Siliciummaterial angereicherte Materialgemisch einen handelsüblichen Metallseparator, um elektrisch leitende Grobpartikel wie Metallspäne, Stecknadelköpfe, Graphitteile, Schrauben, metallische mechanische Teile auszusortieren.

Sodann sieht die Erfindung vor, dass das Materialgemisch, aus dem makroskopisch sichtbare Teile sowie ein erheblicher Anteil von anhaftenden Staubpartikeln bereits entfernt sind, nach der Separierung der elektrisch leitenden Grobteile auf eine Fördereinrichtung wie -band mittels einer Verteilereinrichtung flächig verteilt aufgegeben wird, um von diesem Teile wie Klebeband, stark oxidiertes Siliciummaterial, visuell erkennbar verunreinigtes Silicium und/oder sonstige nicht metallische Teile auszusortieren. Das Aussortieren kann von Hand oder automatisch erfolgen. Dabei ist insbesondere vorgesehen, dass die Fördereinrichtung bezüglich der Bandgeschwindigkeit variabel einstellbar ist, um so ein Aussortieren im gewünschten Umfang sicherzustellen.

Von der Fördereinrichtung kann das als Gutmaterial qualifizierte Siliciummaterial einem Sammelbehälter oder unmittelbar einer Einrichtung zur weiteren Aufbereitung zugeführt werden.

Unabhängig hiervon sollte die Förderung des Materialgemisches mit der ersten Vibrationsrinne, der Siebeinrichtung, dem Förderer durch den Metallseparator sowie der Fördereinrichtung der Verteilereinrichtung derart geregelt werden, dass ein konstanter oder nahezu konstanter Massenfluss (Gewicht pro Zeiteinheit) gegeben ist.

Das Regeln erfolgt dabei durch Wiegen des am Ende der Sortierstrecke gewonnenen Materials. In Abhängigkeit von dem gemessenen Gewicht wird die Aufgabe des zu reinigenden Silicium-Massenflusses geregelt. Liegt folglich die gewogene Menge unter einem vorgegebenen Wert, so wird mehr Material auf die Vibrationsrinne aufgegeben bzw. deren Geschwindigkeit erhöht. Wird zuviel behandeltes Siliciummaterial pro Einheit gewogen, so wird entsprechend die Menge des aufzugebenden Siliciummaterials bzw. die Fördergeschwindigkeit in der Vibrationsrinne reduziert.

Mit einer entsprechenden Trockenreinigung lässt sich ein Reinigungsfaktor von ca. 10 erreichen, d. h. der Verschmutzungsgrad ist bezogen auf den Ausgangswert des Siliciums auf ein Zehntel reduziert.

Alternativ kann eine Trockenentstaubung als Vorbehandlung zumindest teilweise in einem Sieb bzw. einer Siebkette erfolgen.

Der Trockenentstaubung kann ein Waschprozess und/oder Ätzprozess folgen.

Ist als weitere Behandlungsstufe ein Waschprozess vorgesehen, so wird das der Fördereinrichtung der Verteilereinrichtung entnommene Siliciummaterial einem Reinigungsbad zugeführt, in dem sich eine Reinigungsflüssigkeit wie Leitungswasser, Leitungswasser mit Tensid, Reinstwasser, destilliertes Wasser oder deionisiertes Wasser befindet. Um das Lösen und den Abtransport von weiterhin anhaftenden Partikeln an der Oberfläche des Siliciummaterials zu ermöglichen bzw. zu erleichtern, wird mittels eines Ultraschallgebers Ultraschall in die Reinigungsflüssigkeit gekoppelt. Die verunreinigte Reinigungsflüssigkeit kann abgeführt werden und verbrauchte Reinigungsflüssigkeit durch neue Reinigungsflüssigkeit ersetzt werden.

Das das Reinigungsbad durchströmende Reinigungsmedium bzw. die Reinigungsflüssigkeit kann auch im Kreislauf geführt werden, um nach einer Reinigung bzw. Filterung dem Reinigungsbad wieder zugeführt zu werden.

Der Transport der zu reinigenden Materialien im Reinigungsbad erfolgt insbesondere durch eine schräg gestellte Vibrationsrinne, auf der das Material gleichmäßig und insbesondere einlagig verteilt angeordnet und transportiert werden kann. Vorteil des einlagigen Transports ist die verbesserte Lösung anhaftender Partikel, ohne das etwaige Materiallagen am Abtransport hinderlich sein können. Durch die Schrägstellung der Vibrationsrinne kann das Material des Weiteren aus dem Reinigungsbad heraustransportiert werden. Der nachfolgende Spülprozess kann in der gleichen Anordnung erfolgen, d. h. dass ein Abschnitt der Anordnung zum Reinigen und ein nachfolgender Abschnitt zum Spülen ausgelegt ist, wobei das Fördern der Materialien mit dem gleichen Mittel wie schräggestellter Vibrationsrinne erfolgt. Anstelle einer schräggestellten Vibrationsrinne kann auch ein Förderband mit Gewebematerial, das als Sieb ausgeführt ist, verwendet werden.

An die Reinigungsstufe kann sich ein Trocknungsprozess anschließen. Dabei sind eine Vielzahl von Möglichkeiten gegeben, die Trocknung durchzuführen. Diese kann erfolgen durch:
- Zentrifuge (batchweises Trocknen)
- Vibrationsrinne + Heißluftgebläse + optische Strahlung (Trocknen bei kontinuierlichem Transport des Materials)
- Trocken- und/oder Vakuumtrockenschrank (batchweises Trocknen)
- Trockentunnel mit Mikrowelleneinkopplung (Trocknen bei kontinuierlichem Transport des Materials).

Der einlagige Transport des Siliciummaterials durch das Reinigungsbad und aus dem Bad heraus ermöglicht insbesondere eine Trocknung in einem Trockentunnel mit Mikrowelleneinkopplung. Durch die einlagige Materialschicht können die Mikrowellen sehr gut in die Dipole der H₂O-Moleküle einkoppeln. Um die Trocknung zu verbessern, kann des Weiteren vorgesehen sein, dass in der Trockenstrecke eine Wendestation für das Material vorgesehen ist. Dies kann durch gestuft angeordnete Transportabschnitte erfolgen, durch die beim Herabfallen der Materialien ein Wenden dieser erfolgt.

Nach der Trocknung kann das Material in einem Behälter gesammelt oder direkt einem nächsten Aufbereitungsschritt zugeführt werden, bei dem es sich z. B. um Ätzen handelt.

Unabhängig hiervon wird durch die zuvor erläuterte Nassreinigung ein Reinigungsfaktor von 10 erreicht, d. h. dass durch das Waschen und die Trocknung der Verunreinigungsanteil, der nach der Trockenentstaubung vorliegt, erneut um den Faktor 10 reduziert wird.

In einem nachfolgenden Ätzschritt kann das aufbereitete Material entweder batchweise in ein Ätzbad eingegeben oder kontinuierlich durch ein Ätzbad geführt werden. Erfolgt ein batchweises Ätzen so wird nach dem Entfernen des Materials aus dem Ätzbad ein Trockenprozess zuvor beschriebener Art durchgeführt, wobei insbesondere ein Transport durch einen Trockentunnel mit Mikrowelleneinkopplung erfolgt.

Wird ein kontinuierliches Verfahren bevorzugt, so können Verfahrensweisen gewählt werden, wie diese im Zusammenhang mit dem Waschprozess erläutert worden sind, wobei gleichfalls in die Ätzflüssigkeit Ultraschall eingekoppelt werden kann. Ätzflüssigkeit ist insbesondere HNO₃ und/oder HF. Kombinationen bzw. unterschiedliche Verdünnungsgrade mit H₂O kommen als Ätzflüssigkeit gleichfalls in Frage. So kann z. B. 5 %-iges HF und/oder 10 %-iges HNO₃ zum Ätzen benutzt werden.

Nach dem Ätzen schließt sich ein Neutralisationsbad an. Dabei wird Neutralisationsflüssigkeit wie Wasser in einem Kreislauf durch das Neutralisationsbad geführt, wobei eine fortwährende Erneuerung erfolgt, um eine rückstandslose Reinigung sicherzustellen.

An das Neutralisationsbad schließt sich ebenfalls eine Trockenstufe wie Trockentunnel mit Mikrowelleneinkopplung an.

Wird ein entsprechendes Ätzen in einem Ätzbad, durch das das Material in der eben beschriebenen Art einlagig gefördert wird, durchgeführt, so ergibt sich ein Reinigungsfaktor von 100 im Vergleich zum batchweisen Ätzen, der in etwa 10fach höher liegt.

Nach dem Trockenprozess wird das Material einem Sammelbehälter zugeführt, um anschließend für ein Herstellungsverfahren für Halbleiterbauelemente wie Solarzellen verwendet zu werden.

Wesentlich für die erfindungsgemäße Lehre ist die Trockenentstaubung, weil diese am wirtschaftlichsten ausgeführt werden kann. Demgegenüber können die Prozessschritte Waschen und Ätzen je nach Bedarf und Rest-Verunreinigungsgrad zusätzlich durchgeführt werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines bevorzugten Ausführungsbeispiels.

Es zeigen:
- Fig. 1: eine Prinzipdarstellung einer Trockenentstaubungsanlage,
- Fig. 2: eine Prinzipdarstellung einer Vibrationsrinne der Trockenentstaubungsanlage gemäß Fig. 1,
- Fig. 3: eine Prinzipdarstellung einer Siebrinneneinrichtung der Trockenentstaubungsanlage gemäß Fig. 1,
- Fig. 4: eine Prinzipdarstellung eines Metallseparators der Trockenentstaubungsanlage gemäß Fig. 1,
- Fig. 5: eine Prinzipdarstellung einer Materialverteilereinrichtung der Trokkenentstaubungsanlage gemäß Fig. 1,
- Fig. 6: eine Prinzipdarstellung eines Reinigungsbades mit integriertem Spülbereich und
- Fig. 7: eine Prinzipdarstellung einer Trocknungsstufe.

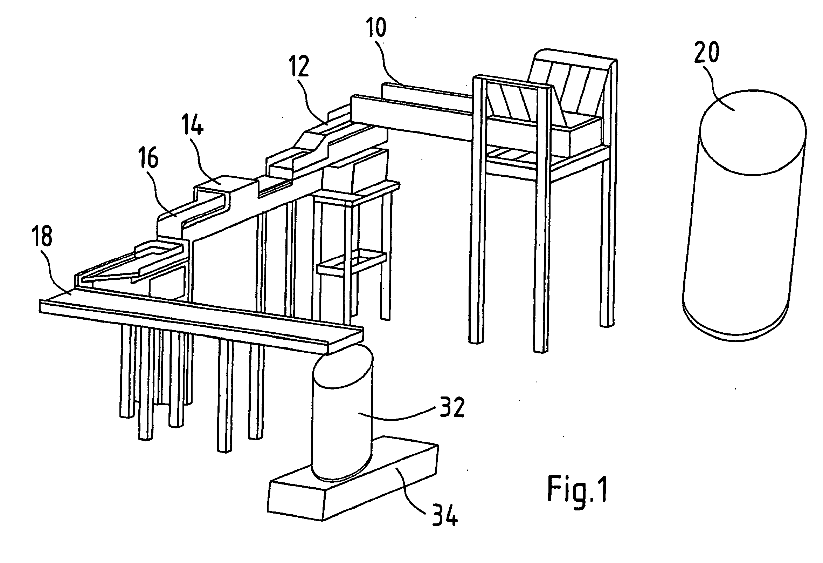

Der Fig. 1 ist eine Prinzipdarstellung von Komponenten zur Durchführung des erfindungsgemäßen Verfahrens zu entnehmen, soweit die Aufbereitung von einem Materialgemisch mit oberflächenverunreinigtem Siliciummaterial wie Siliciumstücken, -granulat und/oder -waferbruch betroffen ist, um Silicium zur Verfügung zu stellen, dass zur Herstellung von Halbleiterbauelementen wie Solarzellen benutzt werden kann. Dabei sollte das aufzubereitende Siliciummaterial im Inneren eine Verunreinigung von weniger als 300 ppb aufweisen, so dass es für die Herstellung von Wafern qualifiziert ist. Oberflächlich kann das aufzuarbeitende Siliciummaterial eine Verunreinigungskonzentration von 1 ppb bis 1000 ppm, vorzugsweise mehr als 10 ppm aufweisen, bezogen auf das Siliciumgewicht.

Ein Materialgemisch aus oberflächenverunreinigtem Siliciummaterial mit Fremdstoffen wie Metallen, Graphitteilen, Metallspänen, Schrauben, Klebstoffen, Haaren wird grundsätzlich zuerst vorsortiert, um große leicht erfassbare bzw. erkennbare Fremdstoffe zu entfernen. Sollte das Ausgangsmaterial viel Staub enthalten, so erfolgt ein Sieben, bevor das vorzugsweise in einem Fass 20 eingefüllte Material einer Trockenentstaubungsanlage (Fig. 1) zugeführt wird, das als wesentliche Anlagenteile eine Vibrationsrinne 10, eine Siebeinrichtung mit Wendeeinrichtung 12, einen Metallseparator 14 und eine Verteilereinrichtung 16 und ein Förderband 18 umfasst, von dem das behandelte Siliciummaterial von makroskopisch sichtbaren Partikeln befreit einem Behälter 32 wie Fass zugeführt wird, der bzw. das auf einer Wägezelle 34 angeordnet ist.

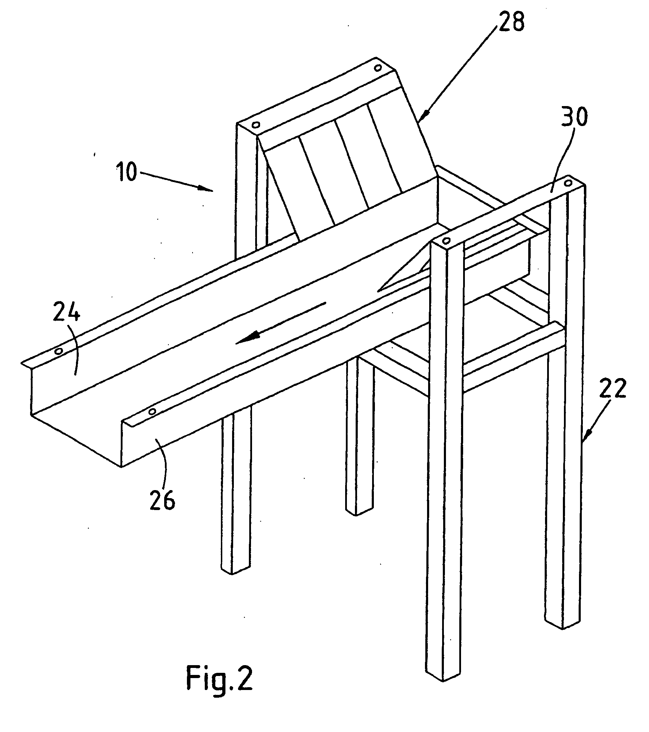

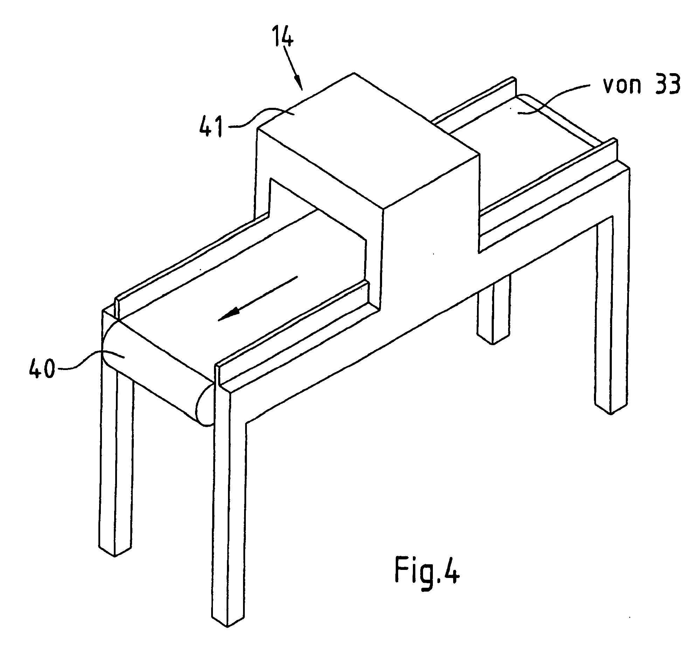

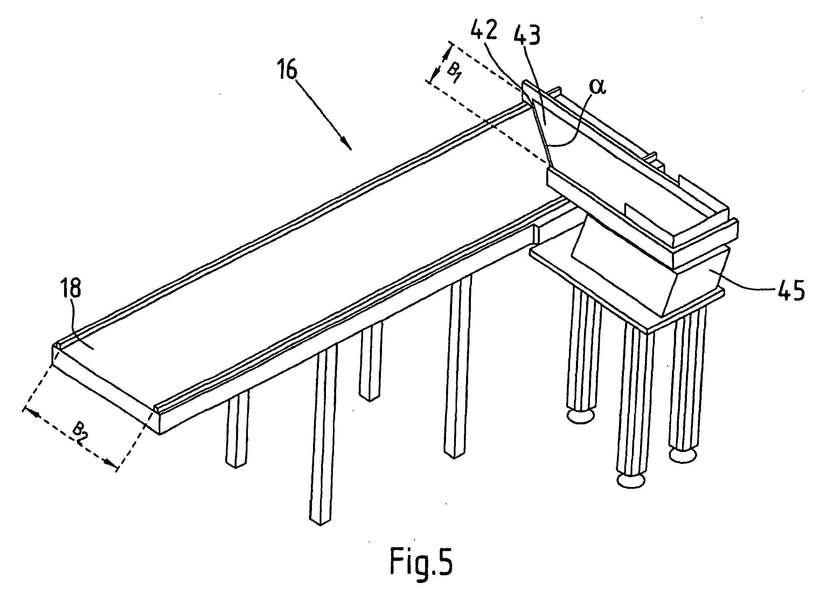

Die in den einzelnen Anlagekomponenten durchzuführenden Behandlungsschritte werden nachstehend im Zusammenhang mit den Prinzipdarstellungen der Fig. 2 - 7 näher erläutert.

Das vorsortierte und ggfs. entstaubte Materialgemisch wird erwähntermaßen in einem Behälter wie Fass 20 zu der Trockenentstaubungsanlage transportiert. Sodann wird das Fass 20 auf einem Fassträger angeordnet, um das Material der Vibrationsrinne 10 zuzuführen, die als Materialbunker bzw. -speicher dient.

Damit beim Aufgeben des Materials dieses in die Vibrationsrinne 10 gelenkt wird, ist die Vibrationsrinne 10 seitlich von Wandungen 24, 26 begrenzt. Zusätzlich sind am Aufgabeort Seitenbleche 28, 30 vorgesehen, um ein Einfüllen ohne Materialverlust zu ermöglichen. Die Vibrationsrinne 10 kann auf einem Gestell 22 aufgeständert sein.

Das Fass 20 kann z. B. ein Fassungsvermögen von 100 kg haben. Die Abmessung des von der Vibrationsrinne 10 und den Seitenwandungen 24, 26 umgebenen Raums beträgt beispielhaft 1500 x 400 x 1800 mm.

Die Menge des von der Vibrationsrinne 10, d. h. dem Materialbunker an die sich anschließende Bearbeitungsstation zu übergebenden Materials wird geregelt, und zwar in Abhängigkeit von der Menge, die dem Förderband 18 entnommen und dem an dessen Ende angeordneten Fass 32 zugeführt wird, das erwähntermaßen auf einer Wägezelle 34 angeordnet ist. Durch eine variable Ansteuerbarkeit der Leistung oder Frequenz des Antriebs der Vibrationsrinne 10 besteht außerdem die Möglichkeit, eine definierte Materialverteilung auf die nachfolgende Siebeinrichtung 12 vorzunehmen, die auch als Siebrinneneinrichtung bezeichnet werden kann.

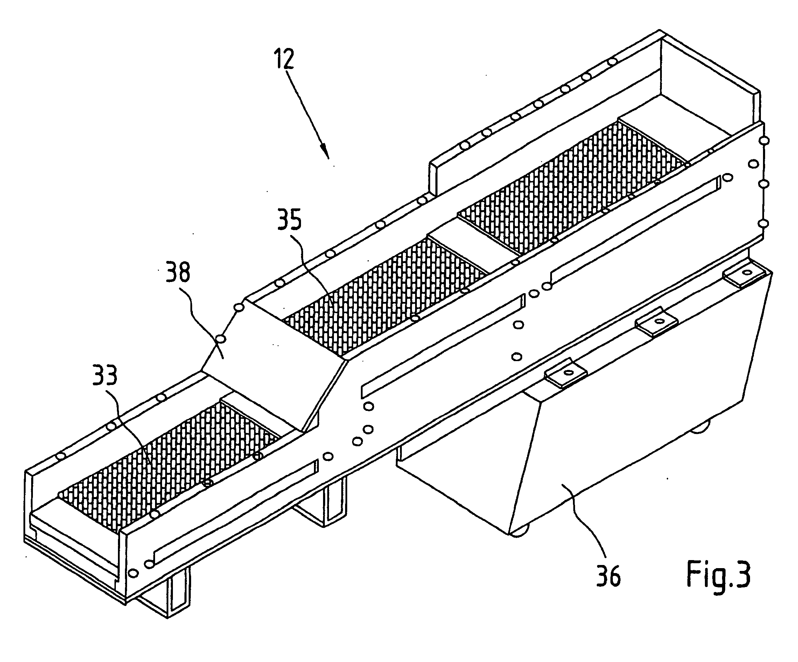

Entsprechend der Darstellung der Fig. 3 kann die Siebeinrichtung 12 mehrstufig ausgebildet sein. Die Siebeinrichtung 12 besteht dabei aus einer oder mehreren Siebrinnen 33, 35, die mit einem Vibrationsantrieb 36 verbunden sind, um die Reinigung von anhaftenden Partikeln wie Staub, Metallen oder anderen Kleinstpartikeln z. B. bis zu 0,5 mm zu ermöglichen.

Bei der mehrteiligen Anordnung ist die in Fig. 3 dargestellte Stufenform zu bevorzugen, wodurch beim Herabfallen von der Siebrinne 33 auf die Siebrinne 35 ein Wenden des Materials und insbesondere der Siliciumteile erfolgt. Hierdurch erfolgt ein Abreinigen der Oberflächenseiten des Siliciummaterials von anhaftenden Fremdpartikeln.

Wie sich aus der Prinzipdarstellung der Fig. 3 ergibt, geht die sich unmittelbar an die Vibrationsrinne 10 anschließende Siebrinne 35 über eine von einer Abdeckung 38 abgedeckte Stufe in die Siebrinne 33 über. Beide Siebrinnen 33, 35 können dabei über eine horizontal wirkende Schwingeinrichtung als Vibrationsantrieb 36 angetrieben werden.

Die Abmessung der Siebeinrichtung 12 kann 1000 x 200 x 300 mm betragen. Die Fördergeschwindigkeit in der Siebeinrichtung 12 ist grundsätzlich konstant, kann jedoch manuell verändert werden.

Das Koppeln der Siebeinrichtung 12 an den Vibrationsantrieb 36 hat zwei wesentliche Vorteile:
- Transport des Siliciummaterials zur nächsten Anlagenkomponenten, wie z. B. in Form eines handelsüblichen Metallseparators 14,
- leichtere Trennung der an größeren Partikeln anhaftenden Partikel wie Staub, Metalle, Kleinstpartikel mit einem Durchmesser z. B. bis zu 0,5 mm von der Oberfläche
- Absieben kleinster Si-Partikel mit großer Oberfläche mit anhaftender Verunreinigung.

Mittels des Siebgewebes der Siebrinnen 33, 35 werden die gelösten Partikel aus dem weiteren Prozess ausgeschlossen. Dabei sollte das Siebgewebe eine Maschenweite zwischen 0,1 mm bis 10 mm, vorzugsweise 0,5 mm aufweisen.

Im Übergang zwischen der Siebrinne 33 und einer durch den Metallseparator 14 führenden Fördereinrichtung in Form eines Fördergurts 40 befindet sich vorzugsweise eine Haarabsaugung, deren Ansaugöffnung sich am Auslass der Siebrinne 33 und oberhalb des Fördergurts 40 befindet. Selbstverständlich könnte eine Absaugung auch am Ende des Fördergurts 40, also im Übergangsbereich zu der Verteilereinrichtung 16 erfolgen.

Mittels des Fördergurts 40 wird das behandelte Material sodann durch einen Metalldetektor 41 geführt. Hierzu wird das Material auf das entsprechende Transportband 40 übergeben. Durch den Metalldetektor 41 werden elektrisch leitende Grobpartikel wie Metallspäne, Stecknadelköpfe, Grafitteile, Schrauben, mechanische Teile etc. herab bis zu einer Größe von 0,2 bis 1 mm erkannt und aus dem Material entfernt.

An den Metallseparator 14 schließt sich Verteilereinrichtung 16 mit Förderrinne 43 und Förderband 18 an, auf das das den Metallseparator 14 bzw. dessen Förderband 40 verlassende Material gleichmäßig verteilt aufgegeben wird. Hierzu ist folgende konstruktive Lösung gewählt. Die Förderrichtung auf der Förderrinne 43 verläuft vorzugsweise senkrecht zu der auf dem Förderband 18 (siehe Pfeilrichtung). Ferner weist die Förderrinne 16 eine Abwurfkante 42 auf, die unter einem Winkel α zu der Förderrichtung des Förderbandes 18 verläuft und sich über die gesamte Breite des Förderbands 18 erstrecken sollte. Somit ist tg α = B₁/B₂ mit B₁ = Breite der Förderrrinne 43 und B₂ = Breite des Förderbands 18. ist. Hierdurch ist sichergestellt, dass das zu übergebende Material gleichmäßig verteilt und im Wesentlichen einlagig auf das Förderband 18 fällt und von diesem transportiert wird.

Die Verteilerrinne 16 kann konstruktiv ein Siebgewebe aufweisen, durch das ein weiteres Entstauben von anhaftenden Partikeln wie Staub etc. erfolgen kann. Die Verteilerrinne 16 wird von einem Antriebsblock 45 in Schwingung versetzt.

Die Geschwindigkeit des Transportbandes 18 kann variabel eingestellt werden. Unabhängig hiervon wird erwähntermaßen das Material vorzugsweise einlagig flächig auf dem Transportband 18 verteilt gefördert und an einem Aussortierplatz vorbeigeführt. An diesem Arbeitsplatz werden vorzugsweise händisch, also durch einen Bediener, gegebenenfalls aber auch automatisch Gegenstände wie Klebeband, stark oxidiertes Silicium, sonstige nicht metallische Komponenten usw. aussortiert.

Am Ende des Bands 18 fällt das Gutmaterial in den Sammelbehälter 32, der zur Bestimmung der angesammelten Menge der Siliciumpartikel auf einer Waage (Wägezelle 34) angeordnet ist, oder auf eine Zuführung zu den nächsten Anlagenkomponenten Waschen und/oder Ätzen, sofern diese benötigt wird.

Die Anlageneinzelkomponenten bestehend aus dem Fass 20, der Vibrationsrinne 10, der Siebrinneneinrichtung (Wenderinne) 12, dem an dem Metallseparator 14 vorbeiführenden Förderband 40, der Verteilerrinne 16, sowie dem an dem Aussortierplatz vorbeiführenden Förderband 18 sind durch eine Regelung derart verknüpft, dass ein konstanter Materialfluss gewährleistet wird. Des Weiteren wird durch die Regelung ein Ausschleusen von elektrisch leitenden Grobpartikeln, die durch den Metallseparator 14 erkannt werden, ermöglicht, ohne zu großem Gutmaterialverlust zu führen.

Sobald der Metalldetektor ein Signal erhält, stoppt die gesamte Anlage. Nur das Förderband 14 des Metallseparators 14 läuft rückwärts und stößt die fehlerhafte Menge, in der sich das Metallpartikel befindet, ab. Alternativ stoppt auch der Metallseparator und das Metallstückchen wird von Hand mit einem Magneten herausgesucht.

Die Regelung wird dadurch ermöglicht, dass das von dem Transportband 18 in das Fass 32 fallende Material aufgefangen und gewogen wird. Ändert sich Gewicht pro Zeiteinheit, so wird entsprechend die Geschwindigkeit der Vibrationsrinne 10 bzw. die Menge des von dem Fass 20 aufzugebenden Materials verändert.

Selbstverständlich ist es nicht erforderlich, dass das das Band 18 verlassende Material von dem Fass 32 aufgefangen wird. Andere Möglichkeiten zur Bestimmung des Materialflusses, d. h. des Gewichts des pro Zeiteinheit entnommenen Materials kommen gleichfalls in Frage.

Der Durchsatz pro Stunde liegt vorzugsweise zwischen 10 kg und 30 kg.

Die zuvor erläuterte Trockenentstaubung bietet einen Reinigungsfaktor von in etwa 10.

Nach Sammeln des Gutmaterials von dem an der Aussortierstation vorbeigeführten Gut kann dieses einer Nassreinigung unterzogen werden. Diese kann wiederum zwei Prozessstufen umfassen. So kann das Siliciummaterial zunächst gewaschen werden. Hierzu kommt als Reinigungsflüssigkeit vorzugsweise Leitungswasser ggf. mit Tensiden, Reinstwasser wie destilliertes Wasser oder deionisiertes Wasser in Frage. Um das Lösen und den Abtransport von anhaftenden Partikeln an der Siliciumoberfläche zu ermöglichen bzw. zu erleichtern, kann durch einen Ultraschallgeber Ultraschall in die Reinigungsflüssigkeit eingekoppelt werden.

Durch einen Flüssigkeitskreislauf wird verunreinigte Flüssigkeit während des Reinigungsprozesses abtransportiert, gereinigt und gefiltert und dem Reinigungsbad wieder zugeführt.

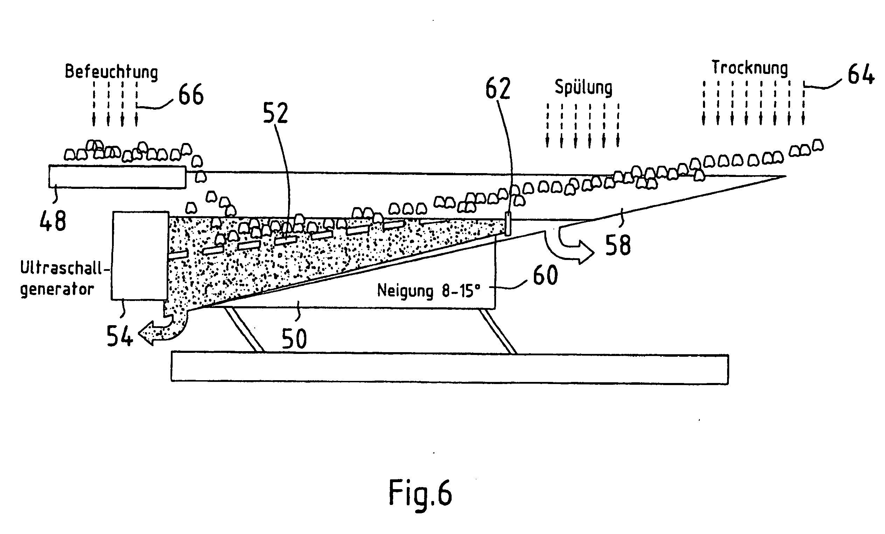

Eine entsprechende Reinigungsstufe ist der Fig. 6 rein prinzipiell zu entnehmen. Über eine Fördereinrichtung wie ein Transportband 48 wird das Material in ein Reinigungsbad 50 abgeworfen, um auf eine schräggestellte Fördereinrichtung wie Vibrationsrinne 52 zu fallen, mittels der das Material durch das Reinigungsbad 50 gefördert wird. Auf der Vibrationsrinne 52 wird das Material gleichmäßig einlagig verteilt transportiert. Vorteil des einlagigen Transports ist die gute Ablösung oder im Fall von Säure Auflösung anhaftender Partikel, ohne dass darüber liegende Materiallagen den Abtransport behindern können. Zur Erhöhung der Reinigungswirkung wird Ultraschall eingeschaltet. Hierzu ist ein Ultraschallgenerator 54 vorgesehen, der an einer Wandung oder beidseitig des Reinigungsbades 50 angeordnet ist. Wie sich aus der Prinzipdarstellung der Fig. 6 ergibt, wird verbrauchtes Wasser (Schlechtwasser) abgezogen, um durch frische Reinigungsflüssigkeit ersetzt zu werden.

An die Reinigungsstufe 50 schließt sich eine Spülstufe 58 an, die ein Abschnitt einer die Reinigungsstufe 50 aufweisenden Wanne 60 sein kann. Die Reinigungsstufe 50 ist von der Spülstufe 58 durch eine unterhalb der Vibrationsrinne 52 verlaufende Trennwand 62 unterteilt. Nach Verlassen der Spülstufe 58 tritt das Material aus der Flüssigkeit aus, um einer Trocknung 64 unterzogen zu werden.

Zu erwähnen ist des Weiteren, dass das Material vor Eintauchen in die Reinigungsstufe 50 befeuchtet werden kann (Pfeile 66), um zu verhindern, dass das Material auf der Oberfläche der Reinigungsflüssigkeit schwimmt.

An das Reinigungsbad schließt sich direkt eine Trocknung an. Die Trocknung kann erfolgen z.B. durch:
- Zentrifuge
- Vibrationsrinne + Heißluftgebläse + optische Strahlung wie IR-Strahlung,
- Trockenschrank bzw. Vakuumtrockenschrank und/oder
- Trockentunnel mit Mikrowelleneinkopplung

Der einlagige Transport des Siliciummaterials durch das Bad und aus dem Bad heraus ist ideal für eine Trocknung in einem Trockentunnel mit Mikrowelleneinkupplung. Durch die einlagige Materialschicht können die Mikrowellen sehr gut in die H₂O-Moleküle einkoppeln. Durch eine Wendestation - ähnlich wie die Wenderinne 12 - auf der Trocknungsstrecke wird eine sehr gute Trocknung beider Seiten gewährleistet.

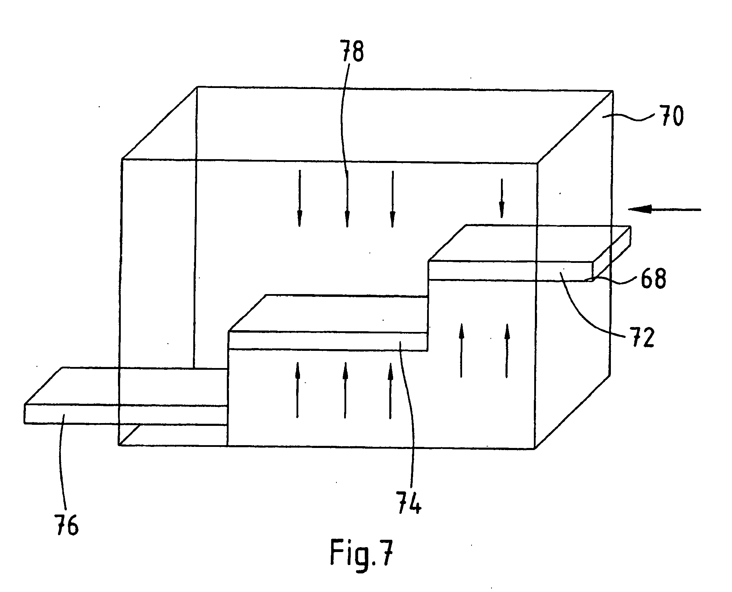

Dies soll anhand der Fig. 7 rein prinzipiell erläutert werden. So wird das aus dem Spülbad 50 über die schräg gestellte Vibrationsrinne 52 herausgeführte Material auf eine Fördereinrichtung 68 übergeben, die das Material durch ein Gehäuse 70 transportiert. Dabei ist die Fördereinrichtung 68 stufig ausgebildet, wodurch beim Abwerfen des Materials von den vertikal zueinander versetzten Abschnitten 72, 74, 76 der Fördereinrichtung 68 ein Wenden des Materials erfolgt. Gleichzeitig wird das Material mit Mikrowellen beaufschlagt (Pfeile 78), um das gewünschte Trocknen zu ermöglichen. Anstelle der Mikrowelle kann auch Warmluft eingesetzt werden.

Nach der Trocknung kann das Material in einem Behälter gesammelt oder direkt dem nächsten Prozess, dem Ätzen zugeführt werden.

Der Reinigungsfaktor des Waschens beträgt in etwa 10.

Das Ätzen des Materials kann auf zwei Arten durchgeführt werden:
- Standardätzung im Batchverfahren mit anschließender Neutralisation und anschließender Trocknung, wie dies im Zusammenhang mit dem Waschprozess beschrieben worden ist. Dabei ist insbesondere ein Trocknen im Trockentunnel mit Mikrowelleneinkopplung zu bevorzugen. Insgesamt lässt sich bei einer entsprechenden Standardätzung ein Reinigungsfaktor von 10 erreichen.
- Ätzung in einem Ätzbad mit Ultraschalleinkopplung, wobei als Ätzflüssigkeit HNO₃ und/oder HF benutzt wird. Dabei schließt sich direkt ein Neutralisationsbad, nach dem Transport des Siliciummaterials aus dem Ätzbad, an. Durch einen ständigen Kreislauf wird das Neutralisationsbad erneuert, um so ein rückstandsloses Reinigen zu gewährleisten. Nach dem Neutralisationsbad schließt sich eine Trocknung zuvor beschriebener Art an, wobei ein Trockentunnel mit Mikrowelleneinkopplung gleichfalls gewährleistet ist.

Das Ätzen und Hindurchführen des Materials durch ein Neutralisationsbad und das anschließende Trocknen kann dabei mit Einrichtungen erfolgen, die einen prinzipiellen Aufbau aufweisen, wie die Wasch- und Trocknungseinrichtungen gemäß der Fig. 6 und 7. Somit wird das Material durch eine schräg gestellte Vibrationsrinne durch die Ätzflüssigkeit geführt, um anschließend der Neutralisationsflüssigkeit ausgesetzt zu werden. Dabei kann sich die Neutralisationsflüssigkeit in einen Abschnitt des von der Ätzflüssigkeit durch eine Trennwand abgeteilten Abschnitts eines entsprechenden Behälters bzw. einer Wanne befinden. Das Trocknen erfolgt gleichfalls vorzugsweise in einem Gehäuse, in dem ein Wenden des Materials erfolgt, wie dies anhand der Fig. 7 erläutert worden ist.

Der Reinigungsfaktor, der durch den Ätzprozess im Ätzbad erzielt wird, beträgt 100.

Nach dem Ätzen und Trocknen wird das gereinigte Material in einem Sammelbehälter aufgefangen und für den Herstellungsprozess von Halbleiterelementen wie Solarzellen zur Verfügung gestellt.

In dem Reinigungs- bzw. Ätzbad sollte das Material auf einem Siebgewebe unter einem Winkel von 5° und 45° zur Horizontalen geneigt befördert werden, wobei bevorzugt der Winkel 15° anzugeben ist. Das Sieb ist in einem Rahmen eingespannt und mit einer Vibrationsvorrichtung verbunden, durch die das Material entlang des Siebgewebes befördert wird. Alternativ kann auch ein Förderband aus Siebgewebe verwendet werden.

Wesentlich für die Aufbereitung oberflächig verunreinigten Siliciums ist die Trockenentstaubung. Die weiteren Prozessschritte des Waschens und des Ätzens können je nach Bedarf und Verunreinigungsgrad zusätzlich durchgeführt werden.

Insgesamt ist die Aufbereitungskette wie folgt zusammenzufassen:
- Sortieren,
- Aufreinigen (Trockenentstauben) durch Sieben,
- Naßentstauben (Spülen/Entstauben mit Wasser/Ultraschall),
- Ätzen in HNO₃/HF,
- Trocknen durch Warmluft und Materialbewegung, Vakuumofen oder Mikrowellen.

Ein Vorsortieren ist meistens grundsätzlich dem zuvor beschriebenen Trockenentstauben vorangestellt. Insbesondere kann ein Vorsieben erfolgen, wenn das Material sehr viel Staub enthält.

In der Trockenentstaubung ist ein Reinigungsfaktor von 10 erzielbar, wobei die Reinheit des Siliciummaterials nach Verlassen der Trockenentstaubung derart sein kann, dass die Verunreinigung 1 bis 3 ppmw beträgt. Mit der anschließenden Naßentstaubung, die durch das Waschen bestimmt ist, ist ein weiterer Reinigungsfaktor von 10 erzielbar, der zu einer Reinheit zwischen 100 ppbw bis 300 ppbw an Verunreinigung führt.

Der Ätzschritt führt beim batchweisen Ätzen zu einem Reinigungsfaktor 10, so dass sich eine Reinheit zwischen 10 und 30 ppbw ergibt. Wird ein kontinuierliches Ätzen in einem Ätzbad durchgeführt, so ergibt sich eine Reinheit von 1 ppbw - 3 ppbw, also ein Reinigungsfaktor von 100.

Erfindungsgemäß erfolgt das Aufbereiten bzw. Aussortieren mit einer Sortieranlage bestehend aus einem Materialtrog, der als Vibrationsrinne, Förderband etc. ausgeführt ist, von dem aus das Material einem Entstaubungssieb zugeführt wird, wobei durch Absieben von Unterkom und Staub eine Reinheitsverbesserung um den Faktor 10 erzielt wird, von wo aus das Material durch einen Metalldetektor läuft, der elektrisch leitende Grobpartikel wie Metallspäne, Stecknadelköpfe, Grafitteile, Schrauben, mechanische Teile erkennt und auswirft, von wo aus das Material gleichmäßig auf ein Transportband wie Förderband, Vibrationsrinne etc. verteilt wird, von dem aus nicht leitfähige Partikel von Hand oder automatisch entfernt werden. Haare und leichte Gegenstände können mittels Absauger wie Staubsauger entfernt werden.

## Patentansprüche

1. Verfahren zur Aufbereitung von in einem Materialgemisch vorhandenem oberflächenverunreinigten Siliciummaterial wie Siliciumsticken, -granulat einschließlich Kugelgranulat und/oder -Waferbruch, insbesondere Siliciummaterial mit einer Oberflächenverunreinigung von 1 ppb - 1000 ppm, insbesondere 10 ppm - 1000 ppm, bezogen auf das Gewicht von Silicium, umfassend die Verfahrensschritte in beliebiger Reihenfolge
a) Entfernen von an der Oberfläche des Siliciummaterials anhaftendem Material durch Absieben des Materialgemisches mittels eines siebgewebes,
b) Separieren von elektrisch leitenden Grobpartikeln aus dem Materialgemisch und
c) Entfernen von visuell erkennbarem Fremdmaterial und stark oxidiertem Siliciummaterial aus dem Materialgemisch.

2. Verfahren nach Anspruch 1,
**gekennzeichnet durch** die weiteren Verfahrensschritte
d) Waschen des Siliciummaterials mit ggf. Ultraschallunterstützung,
e) Trocknen des Siliciummaterials,
f) Ätzen des Siliciummaterials und
g) Trocknen des Siliciummaterials.

3. Verfahren nach Anspruch 1 oder 2,
**dadurch gekennzeichnet,**
**dass** Siliciummaterial aufbereitet wird, das im Inneren eine Verunreinigung zwischen 10 ppt ≤ x ≤ 300 ppb aufweist, wobei das Aufbereiten des Siliciummaterials vorzugsweise zumindest die Verfahrensschritte a), b), c), f) und g) umfasst.

4. Verfahren nach zumindest einem der vorhergehenden Ansprüche,
**dadurch gekennzeichnet,**
**dass** zum Entfernen von an der Oberfläche des Materialgemischs anhaftendem Fremdmaterial das Materialgemisch auf eine erste Vibrationsrinne gegeben, auf dieser verteilt und sodann dosiert auf eine Siebeinrichtung gegeben wird, die vorzugsweise in Vibration versetzt wird, wobei die Siebeinrichtung vorzugsweise mehrere Siebrinnen umfasst, die derart stufenförmig zueinander angeordnet werden, dass beim Übergang von einer Siebrinne auf die folgende Siebrinne ein Wenden von Teilen des Materialgemischs erfolgt.

5. Verfahren nach zumindest einem der vorhergehenden Ansprüche,
**dadurch gekennzeichnet,**
**dass** die erste Vibrationsrinne derart dimensioniert wird, dass diese als Materialspeicher dient.

6. Verfahren nach zumindest einem der vorhergehenden Ansprüche,
**dadurch gekennzeichnet,**
**dass** Fremdmaterial wie Haare oder sonstige leichte Gegenstände durch Absaugen entfernt werden und/oder dass zum Separieren der elektrisch leitenden Grobpartikel wie Metallspäne, Grafitteile, Schrauben, metallische mechanische Teile und/oder Stecknadelköpfe ein Metallseparator verwendet wird und/oder dass das mit dem Siliciummaterial angereicherte Materialgemisch nach dem Verfahrensschritt b) flächig verteilt auf eine Fördereinrichtung wie -band aufgegeben wird, von dem händisch oder automatisch zu entfernende Teile wie Klebeband, stark oxidiertes Siliciummaterial, und/oder sonstige nichtmetallische Teile aussortiert werden.

7. Verfahren nach zumindest einem der vorhergehenden Ansprüche,
**dadurch gekennzeichnet,**
**dass** die Fördereinrichtung in ihrer Transportgeschwindigkeit variabel ist, wobei vorzugsweise die Transportgeschwindigkeit derart geregelt wird, dass ein kostanter oder nahezu konstanter Materialfluss erfolgt.

8. Verfahren nach zumindest einem der vorhergehenden Ansprüche,
**dadurch gekennzeichnet,**
**dass** das der Fördereinrichtung entnommene Siliciummaterial einem Reinigungsbad zugeführt wird, in dem sich eine Reinigungsflüssigkeit wie Reinstwasser, destilliertes Wasser oder deionisiertes Wasser befindet, wobei die ggf. mit Alkohol vermischte Reinigungsflüssigkeit ggf. mit Tensiden versetzt wird und wobei vorzugsweise die Reinigungsflüssigkeit durch das Reinigungsbad in einem Kreislauf geführt wird und außerhalb des Reinigungsbads gereinigt bzw. gefiltert wird.

9. Verfahren nach zumindest einem der vorhergehenden Ansprüche,
**dadurch gekennzeichnet,**
**dass** in die in dem Reinigungsbad vorhandene Reinigungsflüssigkeit Ultraschall eingekoppelt wird.

10. Verfahren nach zumindest einem der vorhergehenden Ansprüche,
**dadurch gekennzeichnet,**
**dass** das Siliciummaterial durch das Reinigungsbad mittels einer Vibrationseinrichtung oder Förderband, vorzugsweise siebförmiges Förderband transportiert wird, wobei die Vibrationseinrichtung vorzugsweise geneigt ansteigend in dem Reinigungsbad angeordnet wird oder das Reinigungsbad in einer schräg ausgerichteten Vibrationsrinne gehalten wird.

11. Verfahren nach zumindest einem der vorhergehenden Ansprüche,
**dadurch gekennzeichnet,**
**dass** das Siliciummaterial in dem Reinigungsbad auf einem Siebband angeordnet wird, das in Vibration versetzt wird, wobei das Siebband vorzugsweise in dem Reinigungsbad zur Horizontalen einen Winkel a mit 5° ≤ α ≤ 45°, insbesondere 10° ≤ a ≤ 20°, vorzugsweise α in etwa 15° einschließt und/oder dass das Siebband oder das in eine Vibrationsrinne eingebaute Sieb in dem Reinigungsbad von der Vibrationseinrichtung ausgeht, über das das Siliciummaterial aus dem Reinigungsbad transportiert wird.

12. Verfahren nach zumindest einem der vorhergehenden Ansprüche,
**dadurch gekennzeichnet,**
**dass** das Siliciummaterial nach dem Waschen flächig, insbesondere einlagig auf einer Transporteinrichtung wie zweite Vibrationsrinne durch einen Trockentunnel transportiert wird.

13. Verfahren nach zumindest einem der vorhergehenden Ansprüche,
**dadurch gekennzeichnet,**
**dass** das insbesondere mit der Reinigungsflüssigkeit gewaschene Siliciummaterial batchweise einem Ätzbad zugeführt wird und/oder kontinuierlich in kleineren Mengen durch ein Ätzbad gefördert wird, und/oder dass das Siliciummaterial mit einer ätzenden Flüssigkeit wie HNO₃ und/oder HF geätzt wird.

14. Verfahren nach zumindest einem der vorhergehenden Ansprüche,
**dadurch gekennzeichnet,**
**dass** das Siliciummaterial nach Verlassen des Ätzbads einem Neutralisationsbad zugeführt wird, wobei dem Neutralisationsbad vorzugsweise kontinuierlich Neutralisationsflüssigkeit wie Wasser zugeführt wird und/oder wobei die Neutralisationsflüssigkeit im Kreislauf strömt und außerhalb des Neutralisationsbads gereinigt wird.

15. Verfahren nach zumindest einem der vorhergehenden Ansprüche,
**dadurch gekennzeichnet,**
**dass** das Siliciummaterial durch das Ätzbad mittels einer Vibrationseinrichtung transportiert wird, wobei die Vibrationseinrichtung vorzugsweise geneigt ansteigend in dem Ätzbad angeordnet wird.

16. Verfahren nach zumindest einem der vorhergehenden Ansprüche,
**dadurch gekennzeichnet,**
**dass** das Siliciummaterial flächig verteilt auf der Vibrationseinrichtung nach einem der vorhergehenden Reinigungsschritte behandelt wird.

17. Verfahren nach zumindest einem der vorhergehenden Ansprüche,
**dadurch gekennzeichnet,**
**dass** das Siliciummaterial auf einer zweiten Vibrationsrinne als die Vibrationseinrichtung flächig verteilt vorzugsweise durch Heißluft und/oder durch optische wie IR-Strahlung und/oder Mikrowellen unterstützt getrocknet wird.

18. Verfahren nach zumindest einem der vorhergehenden Ansprüche,
**dadurch gekennzeichnet,**
**dass** das Siliciummaterial während der Trocknung mittels einer stufig ausgebildeten Transporteinrichtung gewendet wird.

## Claims

1. Method for processing surface-contaminated silicon material present in a material mixture such as silicon pieces or granulate, spherical granulate and/or broken wafers, in particular silicon material with a surface contamination of 1 ppb - 1000 ppm, in particular 10 ppm - 1000 ppm by weight of silicon, comprising the process steps, in any required sequence, of:
a) removing material adhering to the surface of the silicon material by screening the material mixture by means of a screen cloth,
b) separating electrically conductive coarse particles from the material mixture, and
c) removing visually identifiable foreign material and heavily oxidized silicon material from the material mixture.

2. Method according to Claim 1,
**characterized by** the further process steps of:
d) washing the silicon material, possibly with the assistance of ultrasound,
e) drying the silicon material,
f) etching the silicon material, and
g) drying the silicon material.

3. Method according to Claim 1 or 2,
wherein
silicon material is processed that has internally a contamination between 10 ppt ≤ x ≤ 300 ppb, where the processing of the silicon material preferably comprises at least the process steps a), b), c), f) and g).

4. Method according to at least one of the preceding claims,
wherein
in order to remove foreign material adhering to the surface of the material mixture, the material mixture is placed on a first vibrating channel, spread over it and then metered onto a screening apparatus which is preferably made to vibrate, where the screening apparatus preferably comprises a plurality of screening channels that are arranged in a stepped manner relative to each other such that parts of the material mixture are turned during the transfer from one screening channel to the following screening channel.

5. Method according to at least one of the preceding claims,
wherein
the first vibration channel is dimensioned such that it acts as a material store.

6. Method according to at least one of the preceding claims,
wherein
foreign material such as hairs or other lightweight objects are removed by suction and/or that a metal separator is used to separate the electrically conductive coarse particles such as metal chips, pieces of graphite, screws, metal mechanical parts and/or pinheads, and/or that the material mixture enriched with silicon material in process step b) is spread out flat on a conveying apparatus such as a conveyor belt, from which items requiring removal such as adhesive tape, heavily oxidized silicon material and/or other non-metallic items are sorted out manually or automatically.

7. Method according to at least one of the preceding claims,
wherein
the transport speed of the conveying apparatus is variable, where the transport speed is preferably regulated such that the flow of material is constant or nearly constant.

8. Method according to at least one of the preceding claims,
wherein
the silicon material removed from the conveying apparatus is fed to a cleaning bath containing a cleaning liquid such as ultrapure water, distilled water or deionized water, where the cleaning fluid, which may be mixed with alcohol, may have tensides added, and where the cleaning fluid is preferably passed in a circuit through the cleaning bath and is cleaned or filtered outside the cleaning bath.

9. Method according to at least one of the preceding claims,
wherein
ultrasound is coupled into the cleaning fluid present in the cleaning bath.

10. Method according to at least one of the preceding claims,
wherein
the silicon material is transported through the cleaning bath by means of a vibration apparatus or conveyor belt, preferably a screen-like conveyor belt, where the vibration apparatus is preferably arranged sloping upwards in the cleaning bath, or the cleaning bath is held in an inclined vibrating channel.

11. Method according to at least one of the preceding claims,
wherein
the silicon material in the cleaning bath is arranged on a screening belt that is made to vibrate, where the screening belt is preferably at an angle α to the horizontal, where 5° ≤ α ≤ 45°, in particular 10° ≤ α ≤ 20°, α preferably being approximately 15°, and/or that the screening belt or the screen fitted into the vibrating channel inside the cleaning bath extends from the vibration apparatus, whereby the silicon material is transported out of the cleaning bath.

12. Method according to at least one of the preceding claims,
wherein
after having been washed, the silicon material, arranged in particular in a single layer on a transport apparatus such as a second vibrating channel, is transported through a drying tunnel.

13. Method according to at least one of the preceding claims,
wherein
the silicon material washed in particular with the cleaning fluid is transferred in batches to an etching bath and/or is transported continuously in smaller quantities through an etching bath, and/or that the silicon material is etched with an etching fluid such as HNO₃ and/or HF.

14. Method according to at least one of the preceding claims,
wherein
after leaving the etching bath the silicon material is transferred to a neutralization bath, where the neutralization bath is preferably continuously supplied with neutralization fluid such as water and/or where the neutralization fluid flows in a circuit and is cleaned outside the neutralization bath.

15. Method according to at least one of the preceding claims,
wherein
the silicon material is transported through the etching bath by means of a vibration apparatus, where the vibration apparatus is preferably arranged sloping upwards in the etching bath.

16. Method according to at least one of the preceding claims,
wherein
the silicon material spread flat over the vibration apparatus is treated according to one of the preceding cleaning steps.

17. Method according to at least one of the preceding claims,
wherein
the silicon material spread flat over a second vibration channel as the vibration apparatus is preferably dried by hot air and/or with the assistance of visible radiation such as IR radiation and/or microwaves.

18. Method according to at least one of the preceding claims,
wherein
the silicon material is turned during drying by means of a transport apparatus of stepped design.

## Revendications

1. Procédé de traitement d'un matériau de silicium à surface contaminée présent dans un mélange de matériaux tels que des morceaux ou granulés de silicium, y compris des granulés en forme de billes et/ou des morceaux de plaquette, en particulier d'un matériau de silicium avec une contamination de surface de 1 ppb - 1000 ppm, en particulier de 10 ppm - 1000 ppm, par rapport au poids du silicium, le procédé comprenant les étapes suivantes dans un ordre quelconque :
a) Séparation du matériau adhérant à la surface du matériau de silicium par tamisage du mélange de matériaux au moyen d'une toile à bluter,
b) Séparation des particules brutes électriquement conductrices du mélange de matériaux et
c) Séparation des matériaux étrangers visibles et des matériaux de silicium fortement oxydés du mélange de matériaux.

2. Procédé selon la revendication 1
**caractérisé par** les étapes suivantes :
d) Lavage du matériau de silicium en utilisant éventuellement des ultrasons,
e) Séchage du matériau de silicium,
f) Décapage du matériau de silicium et
g) Séchage du matériau de silicium.

3. Procédé selon la revendication 1 ou 2,
**caractérisé en ce**
**que** le matériau de silicium est préparé, ledit matériau présentant à l'intérieur une contamination comprise entre 10 ppt < x < 300 ppb, le traitement du matériau de silicium incluant de préférence au moins les étapes a), b), c), f) et g).

4. Procédé selon au moins l'une des revendications précédentes,
**caractérisé en ce**
**que**, dans le but de séparer les matériaux étrangers adhérant à la surface du mélange de matériaux, le mélange de matériaux est placé sur une première goulotte vibrante, réparti sur cette dernière puis placé sur un dispositif de tamisage en étant dosé, ledit dispositif de tamisage étant de préférence mis en vibration et comprenant de préférence plusieurs goulottes de tamisage, lesquelles sont disposées en palier les unes par rapport aux autres de sorte que, lors du passage d'une goulotte de tamisage à la goulotte suivante, un retournement de parties du mélange de matériaux s'ensuit.

5. Procédé selon au moins l'une des revendications précédentes,
**caractérisé en ce**
**que** la première goulotte vibrante est dimensionnée de sorte qu'elle sert de réservoir de matériaux.

6. Procédé selon au moins l'une des revendications précédentes,
**caractérisé en ce**
**que** les matériaux étrangers tels que des cheveux ou d'autres objets légers sont enlevés par aspiration et/ou qu'un séparateur de métaux est utilisé pour la séparation des particules brutes électriquement conductrices telles que des copeaux métalliques, des pièces de graphite, des vis, des pièces mécaniques métalliques et/ou des têtes d'épingle, et/ou que le mélange de matériaux enrichi en matériau de silicium conformément à l'étape b) est déversé en étant réparti à plat sur un dispositif de transport, tel un convoyeur à bandes, à partir duquel sont triées les pièces devant être enlevées manuellement ou automatiquement, telles que du ruban adhésif, du matériau de silicium fortement oxydé, et/ou d'autres pièces non métalliques.

7. Procédé selon au moins l'une des revendications précédentes,
**caractérisé en ce**
**que** la vitesse de transport du dispositif de transport est variable, la vitesse de transport étant réglée de préférence de sorte à obtenir un écoulement des matériaux constant ou quasiment constant.

8. Procédé selon au moins l'une des revendications précédentes,
**caractérisé en ce**
**que** le matériau de silicium retiré du dispositif de transport subit un bain de nettoyage dans lequel se trouve un liquide de nettoyage tel que de l'eau déminéralisée, de l'eau distillée ou de l'eau déionisée, le liquide de nettoyage mélangé si nécessaire à de l'alcool étant mélangé le cas échéant à des agents de surface et le liquide de nettoyage étant conduit de préférence par l'intermédiaire du bain de nettoyage dans un circuit puis étant nettoyé ou filtré en dehors du bain de nettoyage.

9. Procédé selon au moins l'une des revendications précédentes,
**caractérisé en ce**
**que** des ultrasons sont ajoutés dans le liquide de nettoyage présent dans le bain de nettoyage.

10. Procédé selon au moins l'une des revendications précédentes,
**caractérisé en ce**
**que** le matériau de silicium est transporté par le biais du bain de nettoyage et à l'aide d'un dispositif à vibrations ou d'un convoyeur à bandes, de préférence d'un convoyeur à bandes en forme de tamis, le dispositif à vibrations étant incliné de préférence de manière ascendante dans le bain de nettoyage ou le bain de nettoyage étant maintenu dans une goulotte vibrante orientée de manière inclinée.

11. Procédé selon au moins l'une des revendications précédentes,
**caractérisé en ce**
**que** le matériau de silicium dans le bain de nettoyage est disposé sur une bande de tamisage, laquelle est mise en vibration, sachant que la bande de tamisage, de préférence dans le bain de nettoyage, comprend à l'horizontale un angle α de 5° < α < 45°, en particulier de 10° <α < 20°, de préférence α à environ 15°, et/ou que la bande de tamisage ou le tamis monté dans une goulotte vibrante dans le bain de nettoyage sort du dispositif à vibrations, ledit tamis transportant le matériau de silicium en dehors du bain de nettoyage.

12. Procédé selon au moins l'une des revendications précédentes
**caractérisé en ce**
**qu'**après le lavage, le matériau de silicium est transporté à plat, en particulier en une seule couche, sur un dispositif de transport tel qu'une seconde goulotte vibrante à travers un tunnel de séchage.

13. Procédé selon au moins l'une des revendications précédentes
**caractérisé en ce**
**que** le matériau de silicium, lavé en particulier avec le liquide de nettoyage,est soumis en discontinu à un bain de décapage et/ou est transporté en continu par petites quantités à travers un bain de décapage, et/ou que le matériau de silicium est décapé avec un liquide décapant tel que HNO₃ et/ou HF.

14. Procédé selon au moins l'une des revendications précédentes,
**caractérisé en ce**
**qu'**après avoir quitté le bain de décapage, le matériau de silicium est soumis à un bain de neutralisation, sachant qu'un liquide de neutralisation, tel que de l'eau, est ajouté de préférence en continu à un bain de neutralisation, et/ou sachant que le liquide de neutralisation est recyclé et nettoyé en dehors du bain de neutralisation.

15. Procédé selon au moins l'une des revendications précédentes,
**caractérisé en ce**
**que** le matériau de silicium est transporté via le bain de décapage à l'aide d'un dispositif à vibrations, le dispositif à vibrations étant incliné de préférence de manière ascendante dans le bain de décapage.

16. Procédé selon au moins l'une des revendications précédentes,
**caractérisé en ce**
**que** le matériau de silicium est traité en étant réparti à plat sur le dispositif à vibrations conformément à l'une des étapes de nettoyage précédentes.

17. Procédé selon au moins l'une des revendications précédentes,
**caractérisé en ce**
**que** le matériau de silicium est séché en étant réparti à plat sur une seconde goulotte vibrante faisant office de dispositif à vibrations, le séchage étant facilité de préférence par de l'air chaud et/ou par rayonnement optique, tel que des rayons IR et/ou des micro-ondes.

18. Procédé selon au moins l'une des revendications précédentes,
**caractérisé en ce**
**que**, pendant le séchage, le matériau de silicium est retourné au moyen d'un dispositif de transport en forme de palier.
